Europäisches Patentamt

(19) European Patent Office

Office européen des brevets

(11) Publication number: **0 056 890**
**B1**

(12) **EUROPEAN PATENT SPECIFICATION**

(45) Date of publication of patent specification: **07.05.86**

(21) Application number: **81300356.3**

(22) Date of filing: **27.01.81**

(51) Int. Cl.⁴: **B 29 C 59/08,** B 29 C 65/48,
F 23 N 5/12, H 02 N 3/00

(54) Improvements in or relating to the bonding of plastics materials and apparatus for use in the preparation of plastics materials for bonding.

(43) Date of publication of application:
**04.08.82 Bulletin 82/31**

(45) Publication of the grant of the patent:
· **07.05.86 Bulletin·86/19**

(84) Designated Contracting States:
**AT BE CH DE FR IT LI LU NL SE**

(56) References cited:
**DE-A-1 504 696**
**DE-A-1 569 313**
**DE-A-2 307 290**

**LANDIS UND GYR MITTEILUNGEN, Vol.12,
1964, No.1, Zug (CH),·R. Spühler: "Die
Ionisationsüberwachung von Gasbrennern",
pages 165-172**

(73) Proprietor: **McKee, Frederick Brian
"Orcades" Mill Road
Burnham-on-Crouch Essex (GB)**

(72) Inventor: **McKee, Frederick Brian
"Orcades" Mill Road
Burnham-on-Crouch Essex (GB)**

(74) Representative: **Dearing-Lambert, Peter Richard
Dearing-Lambert & Co., 18 Main Street
Market Bosworth
Nuneaton Warwickshire CV13 0JW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the bonding of plastics materials and more particularly to the preparation of plastics materials for bonding to like or different plastics material or to non-plastics material using an adhesive.

Polypropylene can be bonded to itself, or even to other plastics materials or to non-plastics materials, with a bond strength which is adequate for many purposes using an adhesive. It is known that the bond strength attainable can be improved if prior to bonding with adhesive the surface of the polypropylene or other plastics material is pre-treated by exposure to a hot, blue gas flame for a few seconds in order to achieve an adhesive compatible, oxidised (dull) finish of the said surface. However, despite such oxidative pre-treatment it has not hitherto been possible to produce a truly adequate bond capable of withstanding substantial stress so that plastics products incorporating the bond can be employed for structural purposes.

According to the present invention, there is provided a method for the pre-treatment of plastics surfaces prior to bonding of the plastics surfaces to other surfaces by use of an adhesive, which comprises exposing the plastics surface to a hot blue gas flame having an oxygen content as little as possible in excess of that which produces the maximum ionisation of gases within the blue zone of the gas flame whereby a dull adhesive-compatible finish is produced on the surface of the plastics material, the oxygen content of the gas at which the maximum ionisation of gases within the blue zone occurs being determined by inserting into the flame a pair of electrically connected current conductors having a gap therebetween, monitoring the minute current produced in the flame, usually after electronic amplification, and setting the oxygen content of the gas flame to a value as little as possible in excess of that at which the maximum current or voltage is produced in the flame and conducted therefrom by said current conductors.

According to a second aspect of the invention, there is provided apparatus for use in the method set forth in the preceding paragraph which comprises a gas-fuelled burner constituted by a tube for producing a flame for rendering dull the surface of a plastics article to be bonded, the burner having gas inlet means, gas outlet means, current collector means for positioning within the flame produced by the burner, an amplifier for amplifying the current or voltage produced as a result of ionisation within the flame and means for reading or recording the current or voltage thereby produced.

The method of this invention is particularly well suited to the pre-treatment of polypropylene surfaces to be bonded to like or different plastics materials. Nevertheless, the method is generally applicable to the bonding of plastics materials which benefit from subjecting to surface oxidation and hence dulling before undergoing bonding. The method of the invention has been found to give good results when applied to the pre-treatment of fluorine-containing polymers such as polytetrafluorethylene, polycarbonates, silicon resins, and melamine-formaldehyde resins. In the case of the last identified plastics, it has been found that the method of the invention places them in a condition in which they can be bonded by means of cyanoacrylate resins which it has not hitherto been possible to employ with such plastics. In addition to preparing plastics materials for plastics-bonding, plastics materials pre-treated by the method of the invention may be bonded to other materials such as properly degreased metals using, for example, such silicon adhesives as Silcoset 152 and 153 and Dow Corning RTV adhesives. Bonding to brickwork can be achieved using silicone-based sealing compounds which are currently available in the building trade.

When carrying out the method of the invention, the extent of exposure of a plastics surface to the blue zone of a flame will depend upon the particular material being treated and will need to be determined by trial for each particular material. Whilst the best test of the success of the pre-treatment will lie in sophisticated methods of structural testing, in practice, in fact, the quality of preparation can generally be evaluated by viewing the appearance of the treated area to see that it has a high degree of dullness and by carrying out simple wetting tests. In general, it has been found that the method of this invention produces particularly good results when an organosilicon adhesive which cures to a resilient mass is produced from the adhesive.

The ionisation which occurs in the blue oxidising zone of the treatment flame can conveniently be determined by electronic amplification of the minute current produced in the flame when a suitable heat resistant gauze or even a pair of electronically connected wires with a gap therebetween is inserted into the flame to produce a current of the order usually of a few nano amps but which may amount to a few micro amps, depending on the current collector used. Insofar as a gauze may be used, the word "gauze" is used herein to denote any electrically conductive and usually metal structure which nevertheless possesses a large open surface area to allow the flame to penetrate therethrough to act on the plastics material being treated. Thus, although gauzes in the conventional sense may be employed, it is also possible to employ perforated or expanded metal sheet structures.

For a better understanding of the invention and to show how the same may be carried into effect, reference will now be made, by way of example only, to the accompanying drawings, in which:—

Figure 1 in an elevation, partly in section of a burner embodying this invention; and

Figure 2 is a transverse cross-section through Figure 1 at A—A.

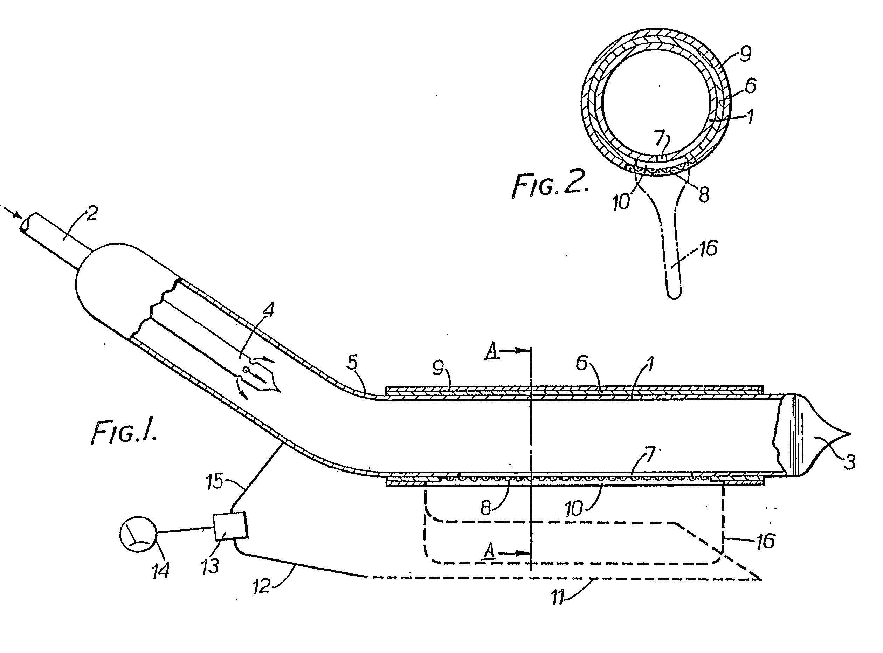

Referring to the drawings, a burner embodying this invention comprises an angled metal, for example copper, tube 1 having an inlet tube 2 for gas and air passing through one end thereof and being closed at the opposite end 3. The inlet tube 2 is closed at its inner end and formed with a plurality of circumferentially disposed outlets 4 thereby ensuring an even distribution of combustion mixture within the tube 1 and helping to ensure that an even flame height is achieved. Beyond an angle 5 provided in the tube 1, the tube 1 is surrounded by a copper tube 6. Over a portion of its length and width at which it is covered by the copper tube 6, the inner tube 1 is formed with an opening 7 which is matched by an opening 10 in the copper tube 6 and over which double thickness opening is laid a stainless steel fine mesh gauge 8. The gauze is held in position by an outer tube 9 around the copper tube 6 and preferably made of aluminium the high thermal conductivity of which prevents the setting up of excessive temperature along the edge of the flame. As can be seen from Figure 2, the opening 7 in the inner tube 6 is narrower than the corresponding opening 10 in the copper tube 6.

Spaced apart from the gauze 8 is a suitable supported metal gauze 11 which will generally be much coarser than the gauze 8 and from which extends a lead 12 to a current amplifier 13 fitted with a microammeter 14. The amplifier 13 is additionally connected through a lead 15 to the copper tube 1.

When the gas burner is in use, a mixture of gas and air is fed into the angled copper tube 1 through the inlet tube 2 and outlets 4. As it emerges from the angled copper tube through the openings 7 and 10 and is ignited, a flame 16 whose configuration is shown better in Figure 2 is produced. This elongate flame is played over the surface of a sheet of plastics materials which is to undergo adhesive bonding to achieve dulling of the surface. The metal gauze 11 is positioned in the flame produced, preferably in the blue part thereof, and ionisation which takes place in the flame and which is at a maximum in the blue part thereof is conducted to the amplifier 13 and the amplifier current thereby produced is read off by means of the microammeter 14. In accordance with this invention, control of the flame is effected until, for a particular combination of gas, for example propane or butane, and oxidising gas, generally air or oxygen, ionisation is at a maximum and hence optimum pre-treatment of the plastics material is obtained.

A machine may be constructed for the flame treatment of zones along the edges of sheet plastics material, for example sheet polypropylene, according to this invention. For this purpose, two of the burners shown in the accompanying drawings may be disposed on a carriage having a reversible drive mechanism to carry them at a substantially uniform rate along the edge to be treated. When the carriage is in its normal rest position, the burner flames play upon the respective ion collector gauzes and the minute current generated is electronically amplified as aforementioned to enable the optimum flame conditions to be established prior to setting the carriage in motion to effect pre-treatment of the sheet plastics material.

Although reference has been made herein in connection with the drawings to the detection of a current as such, since a voltage is concomitantly set up, it is equally possible to use a voltage amplifier and a voltmeter to establish when maximum ionisation of gases takes place in the flame and set the oxygen content of the combustible gases accordingly.

## Claims

1. A method for the pretreatment of a plastics surface prior to bonding of the plastics surface to another surface by use of an adhesive, which comprises exposing the plastics surface to a hot blue gas flame having an oxygen content as little as possible in excess of that which produces the maximum ionisation of gases within the blue zone of the gas flame whereby a dull adhesive-compatible finish is produced on the surface of the plastics material, the oxygen content of the gas at which the maximum ionisation of gases within the blue zone occurs being determined by inserting into the flame a pair of electrically connected current conductors having a gap therebetween, monitoring the minute current produced in the flame, usually after electronic amplification, and setting the oxygen content of the gas flame to a value as little as possible in excess of that at which the maximum current or voltage is produced in the flame and conducted therefrom by said current conductors.

2. A method as claimed in claim 1, whenever applied to the pretreatment of a polypropylene surface.

3. A method as claimed in claim 1 or claim 2, wherein said current conductors form part of a heat resistant metal gauze as hereinbefore defined inserted into the flame.

4. A method as claimed in any one of the preceding claims, wherein, in order to determine the oxygen content of the gas at which the maximum ionisation of gases within the blue zone occurs, the gases undergo combustion in an elongate burner constituted by a tube having gas inlet means for a combustible gas and an oxidising gas and gas outlet means, said pair of electrically connected current conductors being positioned in relation to the gas outlet means so as to lie within a flame produced in the burner, and means for reading or recording the current or voltage produced within the flame.

5. A method as claimed in claim 4, wherein the position of said inlet means is at one end of the elongate burner, the opposite end of which is closed, the gas outlet means being constituted by an elongate slot in a lateral wall surface of the burner.

6. A method as claimed in claim 5, wherein the elongate burner is reinforced in the region of said outlet means by means of a metal sleeve fitted thereover and having an elongate slot aligned with said elongate slot of the burner.

7. A method as claimed in any one of claims 3 to 5, wherein said gas outlet means is covered by a fine mesh metal gauze.

8. A method as claimed in claim 7, when appended to claim 4, wherein said heat resistant metal gauze is coarser than said fine mesh metal gauze.

9. A method as claimed in any one of the preceding claims wherein the current conductors are positioned in the blue part of the gas flame.

10. A method as claimed in any one of the preceding claims, wherein, in a subsequent working step, the plastic surface which has been pretreated is bonded to another surface by means of an organosilicon adhesive.

11. Apparatus for carrying out the method of claim 1 which comprises a gas-fuelled burner constituted by a tube for producing a flame for rendering dull the surface of a plastics article to be bonded, the burner having gas inlet means, gas outlet means, current collector means for positioning within the flame produced by the burner, an amplifier for amplifying the current or voltage produced as a result of ionisation within the flame and means for reading or recording the current or voltage thereby produced.

12. Apparatus as claimed in claim 11, wherein said current collector means is a heat resistant metal gauze as hereinbefore defined.

## Revendications

1. Procédé de traitement préalable d'une surface de matière plastique avant la liaison de celle-ci à une autre surface au moyen d'un adhésif, consistant à exposer la surface de matière plastique à une flamme de gaz bleue chaude ayant une teneur en oxygène supérieure d'aussi peu que possible à celle qui produit l'ionisation maximale des gaz dans la zone bleue de la flamme de gaz, pour donner à la surface de la matière plastique un état mat compatible avec l'adhésif, la teneur en oxygène du gaz à laquelle a lieu l'ionisation maximale des gaz dans la zone bleue étant déterminée en introduisant dans la flamme deux conducteurs de courant reliés électriquement et séparés par un espace, en contrôlant le courant minime produit dans la flamme, ordinairement après amplification électronique, et en réglant la teneur en oxygène de la flamme de gaz à une valeur supérieure d'aussi peu que possible à celle à laquelle le courant ou la tension maximal est produit dans la flamme et conduit à partir d'elle par lesdits conducteurs de courant.

2. Procédé selon la revendication 1, appliqué au traitement préalable d'une surface de polypropylène.

3. Procédé selon l'une des revendications 1 et 2, dans lequel lesdits conducteurs de courant font partie d'une toile métallique résistant à la chaleur comme définie ci-dessus introduite dans la flamme.

4. Procédé selon l'une des revendications précédentes, dans lequel, pour déterminer la teneur en oxygène du gaz à laquelle a lieu l'ionisation maximale des gaz dans la zone bleue, on soumet les gaz à une combustion dans un brûleur allongé constitué d'un tube muni d'un moyen d'entrée de gaz pour un gaz combustible et un gaz oxydant et d'un moyen de sortie de gaz, les deux conducteurs de courant reliés électriquement étant placés, par rapport au moyen de sortie de gaz, de façon à se trouver dans une flamme produite dans le brûleur, et d'un moyen de lecture ou d'enregistrement du courant ou de la tension produit dans la flamme.

5. Procédé selon la revendication 4, dans lequel le moyen d'entrée de gaz est situé à une extrémité du brûleur allongé, dont l'autre extrémité est fermée, le moyen de sortie de gaz étant constitué d'une fente allongée ménagée dans la paroi latérale du brûleur.

6. Procédé selon la revendication 5, dans lequel le brûleur allongé est renforcé dans la région du moyen de sortie de gaz par un manchon métallique monté sur lui et muni d'une fente allongée alignée avec la fente allongée du brûleur.

7. Procédé selon l'une des revendications 3 à 5, dans lequel le moyen de sortie de gaz est couvert d'une toile métallique à mailles fines.

8. Procédé selon la revendication 7 quand celle-ci est associée à la revendication 4, dans lequel la toile métallique résistant à la chaleur est plus grosse que la toile métallique à mailles fines.

9. Procédé selon l'une des revendications précédentes, dans lequel les conducteurs de courant sont placés dans la partie bleue de la flamme de gaz.

10. Procédé selon l'une des revendications précédentes, dans lequel la surface de matière plastique qui a été soumise au traitement préalable est, dans une opération suivante, liée à une autre surface au moyen d'un adhésif organosilicone.

11. Appareil pour la mise en oeuvre du procédé de la revendication 1, comprenant un brûleur à gaz constitué d'un tube produisant une flamme rendant mate la surface d'un article en matière plastique à lier, ce brûleur possédant un moyen d'entrée de gaz, um moyen de sortie de gaz, un moyen de collecte de courant placé dans la flamme produite par le brûleur, un amplificateur amplifiant le courant ou la tension produit par suite de l'ionisation dans la flamme, et un moyen de lecture ou d'enregistrement du courant ou de la tension produit.

12. Appareil selon la revendication 11, dans lequel le moyen de collecte de courant est une toile métallique résistant à la chaleur comme définie ci-dessus.

## Patentansprüche

1. Verfahren für die Vorbehandlung einer Kunststofffläche vor dem Verbinden der Kunststofffläche mit einer anderen Fläche durch Verwendung eines Klebmittels, bei welchem die Kunststoffoberfläche einer heißen Blaugasflamme oder Flüssigkeitsgasflamme ausgesetzt wird, die einen Sauerstoffgehalt hat, der ein geringstmöglicher Überschuß gegenüber demjenigen Sauerstoffgehalt ist, bei welchem maximale Ionisation der Gase innerhalb der Blauzone der Gasflamme erzeugt wird, wodurch ein stumpfes klebmittelverträgliches Finish an der Fläche des Kunststoffmaterials erzeugt wird, wobei der Sauerstoffgehalt des Gases, bei welchem die maximale Ionisation von Gasen in der Blauzone auftritt, dadurch bestimmt wird, daß in die Flamme ein Paar von elektrisch angeschlossenen Stromleitern eingesetzt wird, die einen Spalt zwischen sich haben, der schwache Strom, der in der Flamme erzeugt wird, überwacht wird, üblicherweise nach elektronischer Verstärkung, und der Sauerstoffgehalt der Flamme auf einen Wert eingestellt wird, der einen geringstmöglichen Überschuß gegenüber demjenigen Sauerstoffgehalt darstellt, bei welchem der maximale Strom oder die maximale Spannung in der Flamme erzeugt und durch die Stromleiter von dieser weggeleitet wird.

2. Verfahren nach Anspruch 1, immer wenn es auf die Vorbehandlung einer Polypropylenfläche angewendet wird.

3. Verfahren nach Anspruch 1 oder 2, bei welchem die Stromleiter einen Teil einer hitzebeständigen Metallgaze bilden, die gemäß vorstehender Definition in die Flamme eingesetzt ist.

4. Verfahren nach iregendeinem der vorhergehenden Ansprüche, bei welchem, um den Sauerstoffgehalt des Gases, bei welchem die maximale Ionisation von Gasen innerhalb der Blauzone auftritt, zu bestimmen, die Gase einer Verbrennung in einem langgestreckten durch ein Rohr dargestellten Brenner unterworfen werden, der eine Gaseinlaßeinrichtung für ein brennbares Gas und ein oxidierendes Gas und eine Gasauslaßeinrichtung aufweist, wobei das Paar von elektrisch angeschlossenen Stromleitern in Relation zu der Gasauslaßeinrichtung derart angeordnet ist, daß die Stromleiter in einer in dem Brenner erzeugten Flamme liegen, und eine Einrichtung vorgesehen ist zum Ablesen oder Aufzeichnen des Stromes oder der Spannung, die in der Flamme erzeugt sind.

5. Verfahren nach Anspruch 4, bei welchem die Position der Einlaßeinrichtung an einem Ende des langgestreckten Brenners liegt, dessen gegenüberliegendes Ende geschlossen ist, und die Gasauslaßeinrichtung durch einen langgestreckten Schlitz in einer Seitenwandfläche des Brenners dargestellt ist.

6. Verfahren nach Anspruch 5, bei welchem der langgestreckte Brenner im Bereich der Auslaßeinrichtung durch eine Metallhülse verstärkt ist, die darüber angeordnet ist und einen langgestreckten Schlitz aufweist, der mit dem langgestreckten Schlitz des Brenners ausgerichtet ist.

7. Verfahren nach irgendeinem der Ansprüche 3 bis 5, bei welchem die Gasauslaßeinrichtung durch eine feinmaschige Metallgaze abgedeckt ist.

8. Verfahren nach Anspruch 7, wenn in Verbindung mit Anspruch 4, bei welchem die hitzebeständige Metallgaze größer als die feinmaschige Metallgaze ist.

9. Verfahren nach irgendeinem der vorhergehenden Ansprüche, bei welchem die Stromleiter in dem Blauteil der Gasflamme angeordnet sind.

10. Verfahren nach irgendeinem der vorhergehenden Ansprüche, bei welchem in einem nachfolgenden Arbeitsschritt die Kunststofffläche, die vorbehandelt worden ist, mittels eines organischen Siliconklebmittels an eine andere Fläche gebunden wird.

11. Vorrichtung zum Ausführen des Verfahrens nach Anspruch 1, wobei die Vorrichtung einen mit gasförmigen Brennstoff betriebenen Brenner, der durch ein Rohr dargestellt ist, aufweist, um eine Flamme zu erzeugen, um die Fläche eines Kunststoffgegenstandes, der gebunden werden soll, stumpf zu machen, der Brenner eine Gaseinlaßeinrichtung, eine Gasauslaßeinrichtung, eine Stromsammeleinrichtung zum Anordnen in der von dem Brenner erzeugten Flamme, einen Verstärker zum Verstärken des Stromes oder der Spannung, die als Ergebnis der Ionisation in der Flamme erzeugt sind, und eine Einrichtung aufweist zum Ablesen oder Aufzeichnen des Stromes oder der Spannung, die dadurch erzeugt sind.

12. Vorrichtung nach Anspruch 11, bei welcher die Stromsammeleinrichtung eine hitzebeständige Metallgaze gemäß vorstehender Definition ist.

FIG.2.

FIG.1.